# EUROPÄISCHE PATENTSCHRIFT

(11) **EP 2 148 895 B1**
(45) Veröffentlichungstag und Bekanntmachung des Hinweises auf die Patenterteilung: **19.01.2011**
(21) Anmeldenummer: 08749355.7
(22) Anmeldetag: 07.05.2008
(51) Int. Cl.: C08G 18/34, C09D 175/06

(54) **AUFGESÄUERTE POLYESTERPOLYURETHAN-DISPERSIONEN**
ACIDIFIED POLYESTER POLYURETHANE DISPERSIONS
DISPERSIONS DE POLYESTERPOLYURÉTHANE ACIDIFIÉES

(30) Priorität: 16.05.2007 DE 102007023319
(43) Veröffentlichungstag der Anmeldung: 03.02.2010
(73) Patentinhaber: Bayer MaterialScience AG, 51368 Leverkusen (DE)
(72) Erfinder: BLUM, Harald, 97840 Hafenlohr (DE); MÜLLER, Heino, 51375 Leverkusen (DE)
(74) Vertreter: Klimiuk, Meike
(86) Internationale Anmeldenummer: PCT/EP2008/003634
(87) Internationale Veröffentlichungsnummer: WO 2008/138518

(56) Entgegenhaltungen:
- EP-A- 0 427 028
- EP-A- 0 669 352

## Beschreibung

Die Erfindung betrifft neue aufgesäuerte, hydroxyfunktionelle Polyesterpolyurethan-Dispersionen, Verfahren zu deren Herstellung und ihre Verwendung in Kombination mit Vernetzerharzen zur Herstellung von Lacken, Beschichtungen und Klebstoffen.

Wasserverdünnbare Polyester werden dadurch erhalten, dass hydroxyfunktionelle Polyester mit Säureanhydriden umgesetzt und dadurch Carboxylendgruppen in den Polyester eingebaut werden, die nach Neutralisation in hydrophilierend wirkende Salzgruppen überführt werden. Solche Produkte werden z.B. in der EP-A 0 330 139 und in der DE-A 37,39,332 beschrieben. Da die auf diese Weise eingebauten Carboxylgruppen in wässriger Lösung bzw. Dispersion eine, mit zunehmendem pH-Wert, steigende Tendenz zur Verseifung aufweisen, werden solche Produkte in relativ großen Mengen an organischen Lösemitteln gelöst und erst kurz vor der Herstellung bzw. Applikation des Lackes in Wasser dispergiert. Somit werden mögliche Probleme auf Grund der Verseifungsanfälligkeit minimiert. Allerdings wird dies durch einen sehr hohen Gehalt an organischen Lösemitteln erkauft, der heutigen Anforderungen an emissionsarmen Beschichtungen nicht mehr entspricht. Des Weiteren ist der nachträgliche Dispergierschritt relativ umständlich und aufwendig.

Wässrige Polyester-Dispersionen werden häufig durch Umsetzung von hydroxyfunktionellen Polyestern mit Hydroxycarbonsäuren und Polyisocyanaten hergestellt. Dadurch wird erreicht, dass die zur Hydrophilierung notwendigen Säuregruppen, über hydrolysestabile Urethangruppen in das Polymer eingebaut werden. Solche Produkte werden z.B. in der EP-A 0 498 156, EP-A 0 496 205, DE-A 39,36, 288 oder in der DE-A 35,45,618 beschrieben. Solche urethangruppenhaltige Polyesterdispersionen weisen üblicherweise ein gutes Eigenschaftsniveau bezüglich Lagerstabilität und mechanischer bzw. filmoptischer Eigenschaften auf. Nachteilig ist jedoch, dass zur Herstellung dieser urethangruppenhaltigen Polyester-Dispersionen in der Regel größere Lösemittelmengen notwendig sind, die anschließend wieder abdestilliert werden müssen. Darüber hinaus weisen die Produkte deutlich höhere Molekulargewichte als reine Polyester auf, was zu Nachteilen in der Pigmentbenetzung, in den filmoptischen Eigenschaften und auch in der Haftung auf kritischen Untergründen, im Vergleich zu reinen Polyestern, führen kann.

Es besteht nach wie vor Bedarf an wässrigen Polyesterpolyurethan-Dispersionen, die einfach herstellbar sind, keine ungewöhnlichen Polyesterrohstoffe benötigen, eine sehr gute Pigmentierbarkeit aufweisen und welche die Herstellung von qualitativ hochwertigen Klarlacken, von Lacken und Beschichtungen mit sehr gutem Verlauf, variabel einstellbarem Härte-/Elastizitätsniveau sowie Beständigkeitseigenschaften und guten Steinschlag- und Korrosionsschutzeigenschaften ermöglichen. Die Dispersionen sollten auch bei Lagerung bei 40°C in Kombination mit verschiedenen Vernetzerharzen stabil sein, wobei es nicht zu größeren Viskositätsänderungen bzw. gar zur Bodensatzbildung kommen darf. Dies geschieht häufig wenn Dispersion und Vernetzer nicht ausreichend verträglich sind oder schleichende Vernetzungsreaktionen ablaufen.

Überraschenderweise wurde gefunden, dass spezielle mit Säureanhydriden aufgesäuerte, hydroxyfunktionelle Polyesterpolyurethan-Dispersionen die gestellten Anforderungen sehr gut erfüllen und in Kombination mit Vernetzerharzen, wie z.B. Melaminharzen und/oder Polyisocyanaten zu Lacken und Beschichtungen mit dem geforderten Eigenschaftsniveau aushärtbar sind.

Gegenstand der Erfindung sind hydroxyfunktionelle Polyesterpolyurethan-Dispersionen enthaltend Umsetzungsprodukte aus
a) mindestens einem, mindestens difunktionellen Polyol,
b) mindestens einer (potentiell) ionischen Verbindung mit mindestens einer Säuregruppe und mindestens einer gegenüber Isocyanatgruppen reaktionsfähigen Gruppe, ausgewählt aus der Gruppe der Di-, Tri- oder Monohydroxycarbonsäuren, Hydroxysulphonsäuren, Aminosulphonsäuren oder Aminocarbonsäuren,
c) mindestens einem Säureanhydrid und
d) mindestens einer, mindestens difunktionellen Polyisocyanatkomponente.
   In einer weiteren Ausführungsform der erfindungsgemäßen Polyesterpolyurethan-Dispersionen enthalten diese zusätzlich
e) mindestens eine, mindestens monohydroxyfunktionelle Polyethylenoxidkomponente als Aufbaukomponente.

Die erfindungsgemäßen Polyesterpolyurethan-Dispersionen können gegebenenfalls noch sonstige Komponenten f) enthalten.

Die erfmdungsgemäßen Polyesterpolyurethan-Dispersionen sind bevorzugt Umsetzungsprodukte aus
70 bis 93 Gew.-%, bevorzugt 75 bis 90 Gew.-% der Komponente a),
0,1 bis 3 Gew.-%, bevorzugt 0,5 bis 1,5 Gew.-% der Komponente b),
2 bis 12 Gew.-%, bevorzugt 3 bis 7,5 Gew.-% der Komponente c),
2 bis 12 Gew.-%, bevorzugt 3 bis 7 Gew.-% der Komponente d),
0,1 bis 5 Gew.-%, bevorzugt 0,25 bis 3,5 Gew.-% der Komponente e) und
0 bis 20 Gew.-%, bevorzugt 0-10 Gew.-%. der Komponente f),
wobei sich die Prozentangaben der Komponenten a) bis f) zu 100 Gew.-% ergänzen.

Geeignete Polyole a) sind hydroxyfunktionelle Polyester, Polycarbonate, Polyether, Polyesteramide, Polyesterimide, Polyetheramide, Polyetherimide, Polycarbonatpolyether, Polyetherester und/oder Polycarbonatpolyester. Geeignete Polyole a) weisen eine Funktionalität von 1,5 bis 4 auf.

Bevorzugt besteht die Polyolkomponente a) aus einer Mischung aus mindestens zwei Polyolen, wobei die Polyole ausgewählt sind aus der Gruppe der hydroxyfunktionellen Polyester, Polycarbonate, Polyether, Polycarbonatpolyether, Polyetherester und/oder Polycarbonatpolyester mit einem mittleren Molekulargewicht von 800 bis 6000 g/Mol, bevorzugt von 650 bis 2500 g/Mol und einer Funktionalität von 2 bis 3,5, bevorzugt 1,8 bis 2,5 und mindestens ein Polyol ein Polyester ist. Bevorzugte Polyetherpolyole haben Molekulargewichte von 344 bis 2500 g/Mol und eine mittlere Funktionalität von 2 bis 3.

Besonders bevorzugte Polyole a) bestehen zu mindestens 75 Gew.-% aus einem Polyesterpolyol und zu maximal 25 Gew.-% aus Polyetherpolyolen und/oder Polycarbonatpolyolen und/oder einem zweiten Polyesterpolyol, welches sich vom ersten Polyesterpolyol unterscheidet.

Die theoretische Funktionalität der Polyesterpolyole wird bestimmt nach der Formel:
Val [OH] - Val [COOH]/(Mol [COOH] + Mol [OH]) - Val [COOH].

Die als Komponente a) eingesetzten Polyesterpolyole haben rechnerisch ermittelte, theoretische Molekulargewichte von 500 bis 5000 g/Mol, bevorzugt von 750 bis 4000 g/Mol.

Das theoretische Molekulargewicht der Polyester wird bestimmt nach der Formel:
Masse des Ansatzes [g] / (Mol [COOH] + Mol [OH])- Val [COOH].

Bevorzugte Polyester, die als Polyol a) eingesetzt werden, sind Umsetzungsprodukte aus
a1) 30 bis 70 Gew.-% Dicarbonsäuren,
a2) 20 bis 60 Gew.-% Diolen,
a3) 0 bis 50 Gew.-% Triolen und/oder Tetraolen sowie
a4) 0 bis 50 Gew.-% Monocarbonsäuren.

Geeignete Polyesterrohstoffe a1) sind z.B. Phthalsäureanhydrid, Isophthalsäure, Terephtalsäure, Adipinsäure, Sebacinsäure, Korksäure, Bernsteinsäure, Maleinsäureanhydrid, Fumarsäure, Dimerfettsäuren, Tetrahydrophthalsäureanhydrid, Hexahydrophthalsäureanhydrid, Cyclohexandicarbonsäure oder Trimellithsäureanhydrid und deren Mischungen. Bevorzugte Komponenten a1) sind Adipinsäure, Phthalsäureanhydrid, Tetrahydrophthalsäureanhydrid oder Isophthalsäure.

Geeignete Polyesterrohstoffe a2) sind z.B. 1,2-Ethylengykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylglykol, 1,4-Cyclohexandimethanol, 1,4-Cyclohexandiol, Butendiol, Butindiol, hydrierte Bisphenole, Trimethylpentandiol, 1,8-Octandiol oder Tricyclodecandimethanol und deren Mischungen. Bevorzugte Komponenten a2) sind 1,4-Butandiol, Neopentylglykol, 1,2-Propylenglykol, Ethylenglykol, Diethylenglykol oder 1,6-Hexandiol.

Geeignete Polyesterrohstoffe a3) sind z.B. Trimethylolpropan, ethoxyliertes Trimethylolpropan, propoxyliertes Trimethylolpropan, propoxyliertes Glycerin, ethoxyliertes Glycerin, Glycerin, Pentaerythrit, Rizinusöl oder deren Mischungen. Bevorzugte Komponenten a3) sind Trimethylolpropan, Glycerin, Rizinusöl oder Pentaerythrit.

Geeignete Polyesterrohstoffe a4) sind z.B. C₈-C₂₂-Fettsäuren wie z.B. 2-Ethylhexansäure, Stearinsäure, Ölsäure, Sojaölfettsäure, Erdnussölfettsäure, andere ungesättigte Fettsäuren, hydrierte Fettsäuren, Benzoesäure oder deren Mischungen.

Bevorzugte Polyesterpolyole a) haben mittlere Molekulargewichte von 900 bis 2500 g/mol und eine mittlere Funktionalität von 2 bis 3,5 und eine OH-Zahl von 120 bis 170, bevorzugt 130 bis 160 mg KOH/g.

Die Komponente b) ist eine (potentiell) ionische Verbindung mit mindestens einer Säuregruppe und mindestens einer gegenüber Isocyanatgruppen reaktionsfähigen Gruppe. Geeignete Säuregruppen sind z.B. Carboxyl- und Sulphonsäuregruppen. Geeignete, gegenüber Isocyanatgruppen reaktionsfähige, Gruppen sind z.B. Hydroxyl- und/oder Aminogruppen.

Geeignete Verbindungen b) sind z.B. Di- oder Tri- oder Monohydroxycarbonsäuren, Hydroxysulphonsäuren, Aminosulphonsäuren oder Aminocarbonsäuren, wie beispielsweise 2,2-Bis(hydroxymethyl)-alkancarbonsäuren wie Dimethylolessigsäure, 2,2-Dimethylbuttersäure oder 2,2-Dimethylolpentansäure, Dihydroxybernsteinsäure, Michael-Additionsprodukte von Acrylsäure an Amine wie z.B. Isophorondiamin oder Hexamethylendiamin oder Gemische derartiger Säuren und/oder Dimethylolpropionsäure und/oder Hydroxypivalinsäure. Ebenfalls möglich ist die Verwendung von gegebenenfalls Ethergruppen aufweisenden Sulfonsäurediolen der in US-A 4 108 814 beschriebenen Art oder auch von 2-Aminoethyl-aminoethansulphonsäure.

Bevorzugt handelt es sich bei Komponente b) um eine Carbonsäure, die ein oder zwei Hydroxyl-und/oder Aminogruppen aufweist. Besonders bevorzugt wird als Komponente b) Dimethylolpropionsäure und/oder Hydroxypivalinsäure verwendet.

Die über die Komponente b) eingebauten Säurezahlen der erfindungsgemäßen Polyesterpolyurethan-Dispersionen liegen unter 17,0 mg KOH/g Substanz, bevorzugt unter 7,0 mg KOH/g Substanz.

Die Komponente c) besteht aus mindestens einem Säureanhydrid, wie z.B. Phthalsäureanhydrid, Tetrahydrophthalsäureanhydrid, Hexahydrophthalsäureanhydrid, Maleinsäureanhydrid, Trimellithsäureanhydrid oder Pyromellithsäureanhydrid. Bevorzugt ist Trimellithsäureanhydrid.

Die über die Komponente c) eingebaute Säurezahl der erfindungsgemäßen Polyesterpolyurethan-Dispersionen liegt zwischen 1 bis 69 mg KOH/g Substanz, bevorzugt zwischen 17 bis 45 mg KOH/g Substanz und besonders bevorzugt zwischen 28 bis 36 mg KOH/g Substanz.

Die freien Säuregruppen der Komponenten b) und c) stellen "potentiell ionischen" Gruppen dar, während es sich bei den durch Neutralisation mit Neutralisationsmitteln erhaltenen salzartigen Gruppen, Carboxylat- bzw. Sulphonatgruppen, um "ionische" Gruppen handelt.

Die Komponente d) ist mindestens ein, mindestens difunktionelles Polyisocyanat. Dies können z.B. sein di-, tri- oder gegebenenfalls höherfunktionelle aliphatische Isocyanate wie z.B. Hexamethylendiisocyanat, Butandiisocyanat, Isophorondiisocyanat, 1-Methyl-2,4 (2,6)-diisocyanatocyclohexan, Norbornandüsocyanat, Tetramethylxylylendiisocyanat, Hexahydroxylylendüsocyanat, Nonantriisocyanat, 4,4'- Diisocyanatodicyclohexylmethan. Ebenfalls geeignet sind aromatische Isocyanate wie z.B. 2,4 (2,6)-Diisocyanatotoluol oder 2,4-oder 4,4'-Diisocyanato-diphenylmethan sowie höhermolekulare bzw. oligomere Polyisocyanate des Molekulargewichtsbereiches 336 bis 1500, auf Basis der genannten Isocyanate. Es können auch Mischungen dieser Isocyanaten eingesetzt werden.

Bevorzugt werden Isophorondiisocyanat und/oder Hexamethylendiisocyanat und/oder 2,4 (2,6)-Diisocyanatotoluol eingesetzt.

Geeignete monohydroxyfunktionelle Polyethylenoxidkomponenten e) sind Polymere des Ethylenoxids oder Copolymere oder Blockcopolymere des Ethylenoxid mit Propylenoxid z.B. monohydroxyfunktionelle Ethylenoxidpolyether, monohydroxyfunktionelle Propylenoxid/Ethylenoxid-copolyether oder monohydroxyfunktionelle Propylenoxid/Ethylenoxidblockpolyether, wobei als Startermoleküle z.B. Methanol, Butanol, Ethanol, Methoxypropanol, Butylglykol oder Diethylenglykolmonoalkylether geeignet sind. Komponente e) weist ein Molekulargewicht von 350 bis 2500 g/Mol, bevorzugt von 500 bis 2300 g/Mol auf.

Bevorzugte Komponenten e) sind monohydroxyfunktionelle Polyethylenoxidkomponenten, wie z.B. Polyether LB 25 [Butoxypolyethylenglykol; MG 2250 g/Mol; Bayer MaterialScience AG, Deutschland] oder Methoxypolyethylenglykole mit Molekulargewichten von 500 bis 1500 g/Mol [z.B. MPEG 750, DOW Chemical Company, USA].

Geeignete Komponenten f) können sein Monoamine, Diamine, Polyamine, Aminoalkohole, Diole, Triole, Tetraole, Monoalkohole, di- oder trifunktionelle Polyether, difunktionelle Polycarbonatpolyole, wie z.B. Hydrazin(hydrat), Adipinsäuredihydrazid, Ethylendiamin, Isophorondiamin, Diethylentriamin, Ethylenglykol, Propylenglykol, Neopentylglykol, Butandiol, Hexandiol, Trimethylolpropan, Butylglykol, Butyldiglykol oder Methoxypropanol, 2-Ethylhexanol, Stearylakohol, Benzylalkohol, Polypropylenoxiddiole bzw. -triole bzw. Poly-THFdiole bzw. aliphatische Polycarbonatdiole mit Molekulargewichten von 600 bis 3000 g/Mol oder Gemische der genannten oder anderer Komponenten f).

Zur Herstellung der erfindungsgemäßen Polyesterpolyurethan-Dispersionen können prinzipiell verschiedene Verfahren eingesetzt werden.

Gegenstand der Erfindung ist ein Verfahren (I) zur Herstellung der erfindungsgemäßen Polyesterpolyurethan-Dispersionen, dadurch gekennzeichnet, dass in einem ersten Schritt die Polyolkomponente a), die Säurekomponente b) mit der Polyisocyanatkomponente d) bis zu einem NCO-Wert = 0 % umgesetzt werden, in einem zweiten Schritt das Reaktionsprodukt mit der Anhydridkomponente c) bei 80°C bis 180°C solange umgesetzt wird, bis IR-spektroskopisch keine Anhydridbanden mehr nachweisbar sind, anschließend Neutralisationsmittel und gegebenenfalls organische Lösemittel und/oder Hilfsmittel zugesetzt werden und durch Zugabe von Wasser zum Polymer oder durch Zugabe des Polymers zu Wasser dispergiert wird.

Im Fall, dass eine hydroxyfunktionelle Polyethylenoxidkomponente e) oder gegebenenfalls Komponenten f) eingesetzt werden, werden diese im ersten Schritt des erfindungsgemäßen Verfahrens (I) mit den Komponenten a), b) und d) umgesetzt.

Gegebenenfalls können im erfindungsgemäßen Verfahren (I) bereits im ersten Schritt organische Lösemittel vorhanden sein oder geeignete Katalysatoren zugesetzt werden. Überschüssige Lösemittelmengen können anschließend ganz oder teilweise destillativ abgetrennt werden.

In einer weiteren Ausführungsform des erfindungsgemäßen Verfahrens (I) wird im ersten Schritt eine Teilmenge der Gesamtmenge an Polyolkomponente a) mit Säurekomponente b) mit Polyisocyanatkomponente d) umgesetzt und im zweiten Schritt die restliche Menge an Polyolkomponente a) zugegeben, wobei im ersten Reaktionsschritt 15 bis 75 Gew.-%, bevorzugt 25 bis 60 Gew.-% der Gesamtmenge an Komponente a) eingesetzt wird. Diese Vorgehensweise ist bevorzugt.

Ebenfalls Gegenstand der Erfindung ist ein Verfahren (II) zur Herstellung der erfindungsgemäßen Polyesterpolyurethan-Dispersionen, dadurch gekennzeichnet, dass im ersten Schritt die Polyolkomponente a) mit der Anhydridkomponente c) bei 80°C bis 180°C solange umgesetzt wird, bis IR-spektoskopisch keine Anhydridbanden mehr nachweisbar sind, in einem zweiten Schritt das Reaktionsprodukt mit Säurekomponente b) und Polyisocyanatkomponente d) bis zu einem NCO-Wert = 0 % umgesetzt wird und anschließend Neutralisationsmittel und gegebenenfalls organische Lösemittel und/oder Hilfsmittel zugesetzt werden und durch Zugabe von Wasser zum Polymer oder durch Zugabe des Polymers zu Wasser dispergiert wird.

Im Fall, dass eine hydroxyfunktionelle Polyethylenoxidkomponente e) oder Komponenten f) eingesetzt werden, werden diese im zweiten Schritt des erfindungsgemäßen Verfahrens (II) mit den Komponenten b) und d) umgesetzt.

Gegebenenfalls können im erfindungsgemäßen Verfahren (II) bereits im zweiten Schritt organische Lösemittel oder Neutralisationsmittel vorhanden sein oder geeignete Katalysatoren zugesetzt werden. Überschüssige Lösemittelmengen können anschließend ganz oder teilweise destillativ abgetrennt werden.

In einer weiteren Ausführungsform des erfindungsgemäßen Verfahrens (II) wird im ersten Schritt eine Teilmenge der Gesamtmenge an Polyolkomponente a) mit der Anhydridkomponente c) umgesetzt und im zweiten Schritt die restliche Menge an Polyolkomponente a) zugegeben, wobei im ersten Reaktionsschritt 15 bis 75 Gew.%, bevorzugt 25 bis 60 Gew.-% der Gesamtmenge an Komponente a) eingesetzt wird. Diese Vorgehensweise ist auch für Verfahren (II) bevorzugt.

Geeignete Katalysatoren sind z.B. Dibutylzinndilaurat, Zinn-2-oktoat, Dibutylzinnoxid, Diazabicyclononan, Diazabicycloundecen, Zink- oder Wismutsalze, tertiäre Amine wie z.B. Triethylamin, Dimethylcyclohexylamin oder Ethyldiisopropylamin.

Geeignete Neutralisationsmittel sind z.B. Triethylamin, N-Methylmorpholin, Dimethylisopropylamin, Ethyldiisopropylamin, Dimethylethanolamin, Methyldiethanolamin, Triethanolamin, Diethanolamin, Ethanolamin, 2-Anüno-2-methyl-l-propanol, Ammoniak, Dimethylcyclohexylamin, Morpholin, Kaliumhydroxid oder Natriumhydroxid oder deren Mischungen.

Insgesamt wird soviel Neutralisationsmittel zugegeben, dass der Neutralisationsgrad, bezogen auf eingebaute Säuregruppen, bei 40 bis 150 %, bevorzugt bei 60 bis 100 % liegt. Besonders bevorzugt wird der Neutralisationsgrad so gewählt, dass der pH-Wert der erfindungsgemäßen Dispersion bei 6,7 bis 7,3 liegt.

Geeignete Lösemittel zur Herstellung der erfindungsgemäßen Polyesterpolyurethan-Dispersionen sind grundsätzlich alle nicht isocyanatreaktiven Lösemittel wie z.B. N-Ethylpyrrolidon, N-Methylpyrrolidon, Diethylenglykoldialkylether, Methoxypropylacetat, Solvent Naphta^{®}, Aceton oder Methylethylketon. Nach Umsetzung mit dem Säureanhydrid können auch andere Lösemittel zugesetzt werden, wie z.B. Butylglykol, Methoxypropanol, Diethylenglykol oder Butyldiglykol. Überschüssige Lösemittelmengen können destillativ entfernt werden, wobei die Entfernung der überschüssigen Lösemittelmengen unter reduziertem Druck bei z.B. 20 bis 80°C während oder nach dem Dispergieren in/mit destilliertem Wasser erfolgen kann. Bevorzugt werden jedoch nur solche Lösemittelmengen eingesetzt, dass die resultierenden erfindungsgemäßen Dispersionen höchstens 5 Gew.-% organische Lösemittel enthalten.

Der Festkörpergehalt der erfindungsgemäßen Polyesterpolyurethan-Dispersionen liegt bei 30 bis 55 Gew.-%, bevorzugt bei 35 bis 45 Gew. -%.

Die erfindungsgemäßen Polyesterpolyurethan-Dispersionen weisen Teilchendurchmesser, bestimmt durch LKS-Messungen, von 10 bis 300 nm, bevorzugt von 15 bis 60 nm, bevorzugt 15-40 nm, auf.

Die erfindungsgemäßen Polyesterpolyurethan-Dispersionen können auch zusammen mit anderen ionischen oder nichtionischen Dispersionen gemischt und gemeinsam eingesetzt werden, prinzipiell geeignet sind z.B. Polyvinylacetat-, Polyethylen-, Polystyrol-, Polybutadien-, Polyvinylchlorid-, Polyurethan-, andere Polyester-, Polyacrylat- und/oder Copolymerisat-Dispersionen.

Ebenfalls Gegenstand der vorliegenden Erfindung sind Beschichtungsmittel, enthaltend die erfindungsgemäßen Polyesterpolyurethan-Dispersionen.

Die Beschichtungsmittel können die üblichen Hilfs- und Zusatzmittel enthalten. Hierzu gehören beispielsweise Vernetzungsmittel wie Carbodiimide, Polyisocyanate, blockierte Polyisocyanate, sowie Aminovernetzerharze wie z.B. teilweise oder ganz veretherte Melaminharze bzw. Harnstoff-Formaldehyd-Kondensationsprodukte oder vernetzende Aminoplastharze, organische oder anorganische Pigmente bzw. Metallic-Pigmente auf der Basis von Aluminiumflocken; Füllstoffe wie beispielsweise Ruß, Kieselsäure, Talkum, Kaolin, Glas als Pulver oder in Form von Fasern, Cellulose und deren Mischungen oder anderer für die Herstellung von Lacken, Beschichtungen und Klebstoffen gebräuchlichen Addditive wie z.B. oberflächenaktive Substanzen, Emulgatoren, Stabilisatoren, Antiabsetzmittel, UV-Stabilisatoren, Entschäumer, Antioxidantien, Hautverhinderungsmittel, Verlaufshilfsmittel, Verdicker oder Bakterizide.

Gegenstand der Erfindung ist auch die Verwendung der erfindungsgemäßen Polyesterpolyurethan-Dispersionen zur Herstellung von Lacken, Beschichtungen, Klebstoffen oder Dichtstoffen.

Gegenstand der Erfindung sind auch Beschichtungsmittel, enthaltend
A) die erfindungsgemäßen hydroxyfunktionellen Polyesterpolyurethan-Dispersionen,
B) blockierte Polyisocyanate oder freie Isocyanatgruppen enthaltende Polyiosocyanate oder Aminovernetzerharz, wobei die Polyisocyanate gegebenenfalls hydrophil modifiziert sein können.

Geeignete blockierte Polyisocyanate sind z.B. Umsetzungsprodukte von difunktionellen Isocyanaten wie z.B. Isophorondiisocyanat, Hexamethylendiisocyanat, 2,4- bzw. 2,6-Diisocyanatotoluol, 4.4'-Diphenylmethandiisocyanat oder deren höhermolekularen Trimere, Biurete, Urethane oder Allophanate mit Blockierungsmittel wie z.B. Methanol, Ethanol, Butanol, Hexanol, Benzylakohol, Acetoxim, Butanonoxim, Caprolactam, Phenol, Dimethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin oder tert.-Butylisopropylamin.

Die genannten blockierten Polyisocyanate können auch durch Einbau hydrophiler Gruppen, wie z.B. Carboxylat-, Sulphonat- und/oder Polyethylenoxidstrukturen in eine wasserdispergierbare Form überführt werden und so in Kombination mit den erfindungsgemäßen Polyesterpolyurethan-Dispersionen eingesetzt werden. Die genannten blockierten Polyisocyanate können auch unter Mitverwendung hydroxy- bzw. aminofunktioneller, auch höhermolekularere Komponenten, wie z.B. Diole, Triole, Aminoalkohole, Polyester, Polyether, Polycarbonate und Mischungen der genannten oder anderer Rohstoffe hergestellt werden.

Die erfindungsgemäßen Polyesterpolyurethan-Dispersionen können zur Herstellung von Einbrennlacken und -beschichtungen verwendet werden, die bei Temperaturen von 80°C bis 230°C ausgehärtet werden. Bevorzugte Anwendungsgebiete sind dabei Einbrennfüllerlackierungen, Einschichtlacke, Steinschlagschutzgrundierungen und pigmentierte Decklacke.

Die erfindungsgemäßen Polyesterpolyurethan-Dispersionen können auch zur Herstellung von reaktiven wässrigen Zwei Komponenten (2K)-Polyurethan-Lacken und Beschichtungen verwendet werden.

Bevorzugt sind wässrige, reaktive Zwei-Komponenten-Beschichtungsmittel, enthaltend
A) 60 bis 98 Gew.-% der erfindungsgemäßen Polyesterpolyurethan-Dispersionen,
B) 2 bis 40 Gew.-% freie Isocyanatgruppen aufweisende Polyisocyanate, die gegebenenfalls hydrophil modifiziert sein können.

Die erfindungsgemäßen Polyesterpolyurethan-Dispersionen sind grundsätzlich zur Beschichtung, Lackierung, Verklebung, Behandlung und Abdichten unterschiedlichster Substrate, insbesondere Metalle, Holz, Keramik, Stein, Beton, Bitumen, Hartfaser, Glas, Porzellan, Kunststoffen, Leder oder Textilien der verschiedensten Art geeignet.

Die Beschichtungsmittel, enthaltend die erfindungsgemäßen Polyesterpolyurethan-Dispersionen zeichnen sich durch eine sehr gute Verarbeitbarkeit aus und liefern Beschichtungen, die eine ausgezeichneter Filmoptik und Verlauf, sehr geringer Krateranfälligkeit, guten Beständigkeitseigenschaften und ein ausgeglichenes Härte-/Elastizitätsniveau zeigen.

Werden die erfindungsgemäßen Polyesterpolyurethan-Dispersionen alleine auf Substrate aufgetragen, so erhält man klare, sehr gut verlaufende Schichten ohne Fehlstellen bzw. Krater und es sind sehr hohe Schichtstärken möglich.

### Beispiele:

### Polyesterpolyol PES1)

In einem 5 1 -Reaktor mit Rührer, Rückflusskühler, Destillationsaufsatz und Gaseinleitungsrohr werden bei 190 °C 2486 g Phthalsäureanhydrid, 563 g Trimethylolpropan, 874 g Neopentylglykol und 890 g Diethylenglykol in Gegenwart von 2 g Katalysator Fascat^{®} 4100 (Zinnkatalysator, Arkema Inc., USA) verestert, bis eine Säurezahl von 2,4 erreicht ist. Der Polyester PES1) hat eine OH-Zahl von 148 mg KOH/g Substanz.

### Polyesterpolyol PES2)

In einem 5 1 -Reaktor mit Rührer, Rückflusskühler, Destillationsaufsatz und Gaseinleitungsrohr werden bei 190 °C 1743 g Isophthalsäure, 563 g Trimethylolpropan, 1747 g Neopentylglykol und 920 g Adipinsäure in Gegenwart von 2 g Katalysator Fascat^{®} 4100 (Zinnkatalysator, Arkema Inc., USA) verestert, bis eine Säurezahl von 2,4 erreicht ist. Der Polyester PES2) hat eine OH-Zahl von 146 mg KOH/g Substanz.

### Polyesterpolyol PES3)

In einem 5 1 -Reaktor mit Rührer, Rückflusskühler, Destillationsaufsatz und Gaseinleitungsrohr werden bei 190 °C 932 g Phthalsäureanhydrid, 549 g Trimethylolpropan, 1765 g Diethylenglykol und 1743 g Isophthalsäure in Gegenwart von 2 g Katalysator Fascat^{®} 4100 (Zinnkatalysator, Arkema Inc., USA) verestert, bis eine Säurezahl von 2,1 erreicht ist. Der Polyester PES3) hat eine OH-Zahl von 136 mg KOH/g Substanz.

### Polyesterpolyol PES4)

In einem 15 l -Reaktor mit Rührer, Rückflusskühler, Destillationsaufsatz und Gaseinleitungsrohr werden bei 190 °C 7104 g Phthalsäureanhydrid, 1568 g Trimethylolpropan, 5043 g Diethylenglykol und 856 g Rizinusöl in Gegenwart von 2 g Katalysator Fascat^{®} 4100 (Zinnkatalysator, Arkema Inc., USA) verestert, bis eine Säurezahl von 2,2 erreicht ist. Der Polyester PES4) hat eine OH-Zahl von 150 mg KOH/g Substanz.

### Aufgesäuerte, hydroxyfunktionelle PES-PUR-Dispersion 1)

In ein 41 -Reaktionsgefäß mit Rührer, Rückflusskühler und Stickstoffüberleitung werden 444 g Polyesterpolyol PES4), 10 g Dimethylolpropionsäure und 15,5 g Polyether LB 25 (Monohydroxfunktionelles Polyethylenoxid, MG 2250 g/Mol; Bayer Materialscience AG, Deutschland) eingewogen und bei 100°C homogenisiert. Dann wird eine Mischung aus 12,8 g Isophorondiisocyanat und 38,6 g Hexamethylendiisocyanat zugegeben und solange bei 120°C gerührt bis der NCO-Gehalt = 0% beträgt. Dann werden 57,3 g Trimellithsäureanhydrid und weitere 444 g des Polyesterpolyols PES4) zugegeben, auf 160°C aufgeheizt und gerührt bis keine Anhydridbande mehr durch Infrarot (IR)-Spektroskopie erkennbar ist. Dann werden unter Rühren 113 g Butylglykol zugegeben, auf 80°C abgekühlt, mit 52 g Dimethylethanolamin neutralisiert und durch Zugabe von 1246 g destilliertem Wasser dispergiert.

Es wird die PES-PUR-Dispersion 1) mit einem Festkörpergehalt von 41,2%, einem pH-Wert von 6,8 und einer mittleren Teilchengröße von 27 nm erhalten.

### Aufgesäuerte, hydroxyfunktionelle PES-PUR-Dispersion 2)

In ein 41 -Reaktionsgefäß mit Rührer, Rückflusskühler und Stickstoffüberleitung werden 443 g Polyesterpolyol PES2), 10 g Dimethylolpropionsäure und 7,7 g Polyether LB 25 (Monohydroxfunktionelles Polyethylenoxid, MG 2250 g/Mol; Bayer Materialscience AG, Deutschland) eingewogen und bei 100°C homogenisiert. Dann wird eine Mischung aus 12,8 g Isophorondiisocyanat und 38,6 g Hexamethylendiisocyanat und anschließend 56 g N-Ethylpyrrolidon zugegeben und solange bei 120°C gerührt bis der NCO-Gehalt = 0% beträgt. Dann werden 57,3 g Trimellithsäureanhydrid, weitere 442 g des Polyesterpolyols PES4) und 28 g N-Ethylpyrrolidon zugegeben, auf 160°C aufgeheizt und gerührt bis keine Anhydridbande mehr durch Infrarot (IR)-Spektroskopie erkennbar ist. Dann werden unter Rühren 28 g Butylglykol zugegeben, auf 80°C abgekühlt, mit 55 g Dimethylethanolamin neutralisiert und durch Zugabe von 1230 g destilliertem Wasser dispergiert.

Es wird die PES-PUR-Dispersion 2) mit einem Festkörpergehalt von 43,2%, einem pH-Wert von 7,3 und einer mittleren Teilchengröße von 19 nm erhalten.

### Aufgesäuerte, hydroxyfunktionelle PES-PUR-Dispersion 3)

In ein 41 -Reaktionsgefäß mit Rührer, Rückflusskühler und Stickstoffüberleitung werden 437 g Polyesterpolyol PES1), 10 g Dimethylolpropionsäure und 7,8 g Polyether LB 25 (Monohydroxfunktionelles Polyethylenoxid, MG 2250 g/Mol; Bayer Materialscience AG, Deutschland eingewogen und bei 100°C homogenisiert. Dann wird eine Mischung aus 12,8 g Isophorondiisocyanat und 38,6 g Hexamethylendiisocyanat und anschließend 55 g N-Ethylpyrrolidon zugegeben und solange bei 120°C gerührt bis der NCO-Gehalt = 0% beträgt. Dann werden 57,3 g Trimellithsäureanhydrid und weitere 436 g des Polyesterpolyols PES1) zugegeben, auf 160°C aufgeheizt und gerührt bis keine Anhydridbande mehr durch Infrarot (IR)-Spektroskopie erkennbar ist. Dann werden unter Rühren 55 g Butylglykol zugegeben, auf 80°C abgekühlt, mit 55 g Dimethylethanolamin neutralisiert und durch Zugabe von 1217 g destilliertem Wasser dispergiert.

Es wird die PES-PUR-Dispersion 3) mit einem Festkörpergehalt von 41,1%, einem pH-Wert von 7,3 und einer mittleren Teilchengröße von 24 nm erhalten.

### Aufgesäuerte, hydroxyfunktionelle PES-PUR-Dispersion 4)

In ein 41 -Reaktionsgefäß mit Rührer, Rückflusskühler und Stickstoffüberleitung werden 476 g Polyesterpolyol PES3), 10 g Dimethylolpropionsäure und 7,8 g Polyether LB 25 (Monohydroxfunktionelles Polyethylenoxid, MG 2250 g/Mol; Bayer Materialscience AG, Deutschland eingewogen und bei 100°C homogenisiert. Dann wird eine Mischung aus 31,9 g Isophorondiisocyanat und 24,2 g Hexamethylendiisocyanat und anschließend 57 g N-Ethylpyrrolidon zugegeben und solange bei 120°C gerührt bis der NCO-Gehalt = 0% beträgt. Dann werden 57,3 g Trimellithsäureanhydrid und weitere 475 g des Polyesterpolyols PES3) zugegeben, auf 160°C aufgeheizt und gerührt bis keine Anhydridbande mehr durch Infrarot (IR)-Spektroskopie erkennbar ist. Dann werden unter Rühren 63 g Butylglykol zugegeben, auf 80°C abgekühlt, mit 54 g Dimethylethanolamin neutralisiert und durch Zugabe von 1320 g destilliertem Wasser dispergiert.

Es wird die PES-PUR-Dispersion 4) mit einem Festkörpergehalt von 40,2%, einem pH-Wert von 6,8 und einer mittleren Teilchengröße von 21 nm erhalten.

### Aufgesäuerte, hydroxyfunktionelle PES-PUR-Dispersion 5)

In ein 41 -Reaktionsgefäß mit Rührer, Rückflusskühler und Stickstoffüberleitung werden 402 g Polyesterpolyol PES4), 69 g eines Adipinsäure/Hexandiol/Neopentylglykol-Polyesters mit einer OH-Zahl von 66 g/Mol und 11,3 g Dimethylolpropionsäure eingewogen und bei 100°C homogenisiert. Dann wird eine Mischung aus 37,3 g Isophorondiisocyanat und 18,8 g Hexamethylendiisocyanat zugegeben und solange bei 120°C gerührt bis der NCO-Gehalt = 0% beträgt. Dann werden 57,4 g Trimellithsäureanhydrid und weitere 433 g des Polyesterpolyols PES4) zugegeben, auf 160°C aufgeheizt und gerührt bis keine Anhydridbande mehr durch Infrarot (IR)-Spektroskopie erkennbar ist. Dann werden unter Rühren 114 g Butylglykol zugegeben, auf 80°C abgekühlt, mit 53 g Dimethylethanolamin neutralisiert und durch Zugabe von 1253 g destilliertem Wasser dispergiert.

Es wird die PES-PUR-Dispersion 5) mit einem Festkörpergehalt von 43,0%, einem pH-Wert von 6,7 und einer mittleren Teilchengröße von 23 nm erhalten.

### Aufgesäuerte, hydroxyfunktionelle PES-PUR-Dispersion 6)

In ein 41 -Reaktionsgefäß mit Rührer, Rückflusskühler und Stickstoffüberleitung werden 261 g Polyesterpolyol PES4) und 6,8 g Dimethylolpropionsäure eingewogen und bei 100°C homogenisiert. Dann werden 37,5 g Isophorondiisocyanat zugegeben und solange bei 120°C gerührt bis der NCO-Gehalt = 0% beträgt. Dann werden 34,1 g Trimellithsäureanhydrid und weitere 261 g des Polyesterpolyols PES4) zugegeben, auf 160°C aufgeheizt und gerührt bis keine Anhydridbande mehr durch Infrarot (IR)-Spektroskopie erkennbar ist. Dann werden unter Rühren 66 g Butylglykol zugegeben, auf 80°C abgekühlt, mit 31 g Dimethylethanolamin neutralisiert und durch Zugabe von 635 g destilliertem Wasser dispergiert.

Es wird die PES-PUR-Dispersion 6) mit einem Festkörpergehalt von 44,3%, einem pH-Wert von 6,7 und einer mittleren Teilchengröße von 25 nm erhalten.

### Anwendungstechnische Prüfergebnisse:

### Aufgußprüfung:

Die PES-PUR-Dispersionen 1), 2), 3), 4), 5) und 6) werden jeweils durch Zugabe von 20% Wasser verdünnt und diese verdünnten Lösungen jeweils auf eine gereinigte Glasplatte so aufgegossen, dass die Lösung ablaufen kann. Es werden dann visuell der Verlauf (Bewertung: in Ordnung = i. O. bzw. nicht in Ordnung = n. i. O.) und die Neigung zur Kraterbildung (Bewertung: m = Menge der Krater/ von (ml = keine bzw. ganz vereinzelt Krater) bis (m5 = sehr viele Krater) und g = Größe der Krater von (gl =keine Krater) bzw. sehr kleine Krater bis (g5 = sehr große Krater) beurteilt.
Aufgussprüfung PES-PUR-Dispersion 1) Krater: m1/g1; Verlauf: i. O.
Aufgussprüfung PES-PUR-Dispersion 2) Krater: m1/g1; Verlauf: i. O.
Aufgussprüfung PES-PUR-Dispersion 3) Krater: m1/g1; Verlauf: i. O.
Aufgussprüfung PES-PUR-Dispersion 4) Krater: m1/g1; Verlauf: i. O.
Aufgussprüfung PES-PUR-Dispersion 5) Krater: m1/g1; Verlauf: i. O.
Aufgussprüfung PES-PUR- Dispersion 6) Krater: m1/g2; Verlauf: i. O.
Aus den Polyesterpolyurethan-Dispersionen werden Klarlacke hergestellt:

### Klarlack aus PES-PUR-Dispersion 1):

Bestandteile sind: 207 g PES-PUR-Dispersion 1), 15,5 g Maprenal^{®} MF 904 (Melaminharz, Ineos Melamins GmbH, Frankfurt, Deutschland); 1,7 g Additol^{®} XW 395 (Benetzungsadditiv, Cytec Surface Specialities; USA), 1,7 g Surfynol^{®}104E (Surfactant, Air Products Chemicals Europe B.V., Niederlande), 4,5 g einer 10%igen wässrigen Lösung von Dimethylethanolamin und 58 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 35% und eine Auslaufzeit nach ISO 5 von 38 s. Die Auslaufzeit bleibt auch nach 10 Tagen Lagerung bei 40°C stabil. Nach dem Einbrennen erhält man einen Lackfilm mit sehr gutem Verlauf und Filmoptik, einer Pendelhärte nach DIN 53157 von 113 s und einer Anlösbarkeit von 0123*.
- **Prüfung Anlösbarkeit:*: Belastung des ausgehärteten Lackfilmes für jeweils 1 Minute mit 4 verschiedenen Lösemitteln

Beurteilung: 0 = ohne Befund, 1 = geringe Erweichung (reversibel), 2 = mittlere Erweichung (reversibel), 3 = starke Erweichung, 4 = leichte Beschädigung des Lackes, 5 = Lack abgelöst

**Klarlack aus PES-PUR-Dispersion 2):** Bestandteile sind 197 g PES-PUR-Dispersion 2), 15,5 g Maprenal^{®} MF 904; 1,7 g Additol^{®}XW 395, 1,7 g Surfynol^{®} 104E, 3,9 g einer 10%igen wässrigen Lösung von Dimethylethanolamin und 20 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 42% und eine Auslaufzeit nach ISO 5 von 40 s. Nach dem Einbrennen erhält man einen Lackfilm mit sehr gutem Verlauf und Filmoptik, einer Pendelhärte von 168 s und einer Anlösbarkeit von 2222.

**Klarlack aus PES-PUR-Dispersion 3):** Bestandteile sind 207 g PES-PUR-Dispersion 3), 15,5 g Maprenal^{®} MF 904; 1,7 g Additol^{®} XW 395, 1,7 g Surfynol^{®} 104E, 4,5 g einer 10%igen wässrigen Lösung von Dimethylethanolamin und 35 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 38% und eine Auslaufzeit nach ISO 5 von 32 s. Nach dem Einbrennen erhält man einen Lackfilm mit sehr gutem Verlauf und Filmoptik, einer Pendelhärte von 224 s und einer Anlösbarkeit von 0124.

Ein Salzsprühtest nach DIN 53167 des Lackes auf einem Stahlblech nach Aushärtung für 144 Stunden führt zu einer Unterwanderung an einem Schnitt in der Lackschicht von lediglich 13 mm.

**Klarlack aus PES-PUR-Dispersion 4):** Bestandteile sind: 211,4 g PES-PUR-Dispersion 4), 15,5 g Maprenal^{®} MF 904; 1,7 g Additol^{®} XW 395, 1,7 g Surfynol^{®} 104E, 5,2 g einer 10%igen wässrigen Lösung von Dimethylethanolamin und 34 g destilliertes Wasser.

**Klarlack aus PES-PUR-Dispersion 5):** Bestandteile sind 198 g PES-PUR-Dispersion 5), 15,5 g Maprenal^{®} MF 904; 1,7 g Additol^{®} XW 395, 1,7 g Surfynol^{®} 104E, 5,2 g einer 10%igen wässrigen Lösung von Dimethylethanolamin und 52 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat eine Feststoffgehalt von 37% und eine Auslaufzeit nach ISO 5 von 41 s. Die Auslaufzeit bleibt auch nach 10 Tagen Lagerung bei 40°C nahezu unverändert (37 s). Nach dem Einbrennen erhält man einen Lackfilm mit sehr gutem Verlauf und Filmoptik, einer Pendelhärte von 104 s und einer Anlösbarkeit von 0134.

**Klarlack aus PES-PUR-Dispersion 6) mit Melamin als Vernetzer:** Bestandteile sind 170,5 g PES-PUR-Dispersion 6), 29,4 g Cymel^{®} 328 (Melamin Vernetzerharz, Cytec Industries, USA), 1,7 g Additol^{®} XW 395, 1,7 g Surfynol^{®} 104E, 4,1 g einer 10%igen wässrigen Lösung von Dimethylethanolamin und 53 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 39% und eine Auslaufzeit nach ISO 5 von 41 s. Nach dem Einbrennen erhält man einen Lackfilm mit sehr gutem Verlauf und Filmoptik, einer Pendelhärte von 198 s und einer Anlösbarkeit von 0000.

**Klarlack aus PES-PUR-Dispersion 6) mit blockierten Isocyanat als Vernetzer:** Bestandteile sind 100 g PES-PUR-Dispersion 6), 97,1 g Bayhydur^{®} BL 5140 (Dispersion mit blockierten Polyisocyanatgruppen, Bayer MaterialScience, Leverkusen, Deutschland); 1,7 g Additol^{®} XW 395, 1,7 g Surfynol^{®} 104E, 4,1 g einer 10%igen wässrigen Lösung von Dimethylethanolamin und 53 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 36% und eine Auslaufzeit nach ISO 5 von 40 s. Nach dem Einbrennen erhält man einen hochelastischen Lackfilm mit sehr gutem Verlauf und Filmoptik, einer Pendelhärte von 171 s und einer Anlösbarkeit von 0333.

Ein Salzsprühtest für 144 Stunden führt zu einer Unterwanderung an einem Schnitt in der Lackschicht von 18 mm.

**Pigmentierter Lack (Pigmentierungsgrad 100%)aus PES-PUR-Dispersion 1):** Bestandteile sind: 99,5 g einer Pigmentpaste, 119 g PES-PUR-Dispersion 1), 9,5 g Maprenal^{®} MF 904, 1,8 g einer 10%igen wässrigen Lösung von Dimethylethanolamin und 32 g destilliertes Wasser, die in einer Perlmühle angerieben werden.

Dann wird ein Lackfilm aufgetragen, 8 Minuten bei Raumtemperatur, 10 Minuten bei 80°C und dann 22 Minuten bei 165°C ausgehärtet. Der Lack hat einen Feststoffgehalt von 49% und eine Auslaufzeit nach ISO 5 von 40 s. Nach dem Einbrennen erhält man einen Lackfilm mit sehr gutem Verlauf und Filmoptik, einer Pendelhärte von 140 s und einer Anlösbarkeit von 1122. Der Glanzwert nach Gardner beträgt 78% (60°). Die Erichsentiefung ist 9,5 mm, die Werte des Impacttestes sind >80/>80 (ein/aus), der Gitterschnitt-Test nach DIN 53151 (0 = günstigster Wert; 5 = ungünstigster Wert) = 0.

Ein Salzsprühtest auf Stahl für 144 Stunden führt zu einer Unterwanderung an einem Ritz in der Lackschicht von 13 mm.

An einem kompletten Lackaufbau, bestehend aus einer KTL Schicht, einem Füller gemäß dem oben beschriebenen pigmentierten Lack auf Basis von PES-PUR-Dispersion 1), einem brillantschwarzen Basislack und einem Klarlack werden Steinschlagtests mit sehr guten Ergebnissen durchgeführt:
VDA-Beschuß nach DIN 55996-1/B (2x500g; 2 bar, 45°):
   Beschussgrad (Bewertung 0-5; 0= günstigster Wert) = 1,5; Haupttrennebene = KTL BMW Keil nach DIN 55996-2 (3bar, -20°C):
   Abplatzgröße (mm) = 2,1; Haupttrennebene = KTL
   DC-Beschuss nach DIN 55996-3 (250 km/h; -20°C):
   Abplatzgröße (mm): 2; Haupttrennebene = Blech

### Polyesterpolyol PES5):

In einem 5 l -Reaktor mit Rührer, Rückflusskühler, Destillationsaufsatz und Gaseinleitungsrohr werden bei 190 °C 1570 g Isophthalsäure, 576 g Trimethylolpropan, 1789 g Neopentylglykol, und 1146 g Adipinsäure in Gegenwart von 2 g Katalysator Fascat^{®} 4100 (Zinnkatalysator, Arkema Inc., USA) verestert, bis eine Säurezahl von 2,0 erreicht ist. Der Polyester PES5) hat eine OH-Zahl von 155 mg KOH/g Substanz.

### Polyesterpolyol PES6):

In einem 5 l -Reaktor mit Rührer, Rückflusskühler, Destillationsaufsatz und Gaseinleitungsrohr werden bei 190 °C 2279 g Phthalsäureanhydrid, 590 g Trimethylolpropan, 698 g Neopentylglykol, 1166 g Diethylenglykol und 321 g Adipinsäure in Gegenwart von 2 g Katalysator Fascat^{®} 4100 (Zinnkatalysator, Arkema Inc., USA) verestert, bis eine Säurezahl von 2,4 erreicht ist. Der Polyester PES6) hat eine OH-Zahl von 149 mg KOH/g Substanz.

### Aufgesäuerte, hydroxyfunktionelle PES-PUR-Dispersion 7)

In ein 41 -Reaktionsgefäß mit Rührer, Rückflusskühler und Stickstoffüberleitung werden 448 g Polyesterpolyol PES5), 7,8 g Polyether LB 25, 10 g Dimethylolpropionsäure und 55,8 g N-Ethylpyrrolidon eingewogen und bei 100°C homogenisiert. Dann werden 48,3 g Hexamethylendiisocyanat zugegeben und solange bei 120°C gerührt bis der NCO-Gehalt = 0% beträgt. Dann werden 57,3 g Trimellithsäureanhydrid und weitere 448 g des Polyesterpolyols PES5) zugegeben, auf 160°C aufgeheizt und gerührt bis keine Anhydridbande mehr durch Infrarot (IR)-Spektroskopie erkennbar ist. Dann werden unter Rühren 55 g Butylglykol zugegeben, auf 80°C abgekühlt, mit 50,8 g Dimethylethanolamin neutralisiert und durch Zugabe von 1190 g destilliertem Wasser dispergiert.

Es wird die PES-PUR-Dispersion 7) mit einem Festkörpergehalt von 42,7%, einem pH-Wert von 7,2 und einer mittleren Teilchengröße von 23 nm erhalten.

### Aufgesäuerte, hydroxyfunktionelle PES-PUR-Dispersion 8)

In ein 41 -Reaktionsgefäß mit Rührer, Rückflusskühler und Stickstoffüberleitung werden 448 g Polyesterpolyol PES6), 7,8 g Polyether LB 25, 6,8 g Dimethylolpropionsäure und 55,8 g N-Ethylpyrrolidon eingewogen und bei 100°C homogenisiert. Dann werden 48,3 g Hexamethylendiisocyanat zugegeben und solange bei 120°C gerührt bis der NCO-Gehalt = 0% beträgt. Dann werden 57,3 g Trimellithsäureanhydrid und weitere 448 g des Polyesterpolyols PES6) zugegeben, auf 160°C aufgeheizt und gerührt bis keine Anhydridbande mehr durch Infrarot (IR)-Spektroskopie erkennbar ist. Dann werden unter Rühren 55 g Butylglykol zugegeben, auf 80°C abgekühlt, mit 54 g Dimethylethanolamin neutralisiert und durch Zugabe von 1290 g destilliertem Wasser dispergiert.

Es wird die Dispersion 8) mit einem Festkörpergehalt von 41,7%, einem pH-Wert von 7,1 und einer mittleren Teilchengröße von 25 nm erhalten.

**Klarlack aus PES-PUR-Dispersion 7):** Bestandteile sind: 199 g Dispersion 7), 15,5 g Maprena^{®} MF 904; 1,7 g Additol^{®} XW 395, 1,7 g Surfynol^{®} 104E, 5,1 g einer 10%igen wässrigen Lösung von Dimethylethanolamin und 26 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 40% und eine Auslaufzeit nach ISO 5 von 41 s. Nach dem Einbrennen erhält man einen Lackfilm mit sehr gutem Verlauf und Filmoptik, einer Pendelhärte von 88 s und einer Anlösbarkeit von 2224.

Ein Salzsprühtest für 144 Stunden führt zu einer Unterwanderung an einem Ritz in der Lackschicht von 20 mm.

**Klarlack aus PES-PUR-Dispersion 8):** Bestandteile sind: 204 g Dispersion 8), 15,5 g Maprenal^{®} MF 904; 1,7 g Additol^{®} XW 395, 1,7 g Surfynoll^{®} 104E, 4,5 g einer 10%igen wässrigen Lösung von Dimethylethanolamin und 46 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat eine Feststoffgehalt von 37 % und eine Auslaufzeit nach ISO 5 von 40 s. Nach dem Einbrennen erhält man einen Lackfilm mit sehr gutem Verlauf und Filmoptik, einer Pendelhärte von 162 s und einer Anlösbarkeit von 1124.

Ein Salzsprühtest für 144 Stunden führt zu einer Unterwanderung an einem Ritz in der Lackschicht von 10 mm.

### Aufgesäuerte, hydroxyfunktionelle PES-PUR-Dispersion 9)

In ein 41 -Reaktionsgefäß mit Rührer, Rückflusskühler und Stickstoffüberleitung werden 581 g Polyesterpolyol PES5), 7,8 g Polyether LB 25, 10 g Dimethylolpropionsäure und 24 g Proglide^{®} DMM (Glykolether Lösemittel, DOW, UK] eingewogen und bei 100°C homogenisiert. Dann werden 48,3 g Hexamethylendiisocyanat zugegeben und solange bei 120°C gerührt bis der NCO-Gehalt = 0% beträgt. Dann werden 57,3 g Trimellithsäureanhydrid und weitere 315 g des Polyesterpolyols PES5) zugegeben, auf 160°C aufgeheizt und gerührt bis keine Anhydridbande mehr durch Infrarot (IR)-Spektroskopie erkennbar ist. Dann werden unter Rühren 95 g Butylglykol zugegeben, auf 80°C abgekühlt, mit 51 g Dimethylethanolamin neutralisiert und durch Zugabe von 1190 g destilliertem Wasser dispergiert.

Es wird die Dispersion 9) mit einem Festkörpergehalt von 42%, einem pH-Wert von 7,1 und einer mittleren Teilchengröße von 25 nm erhalten.

### Aufgesäuerte, hydroxyfunktionelle PES-PUR-Dispersion 10)

In ein 41 -Reaktionsgefäß mit Rührer, Rückflusskühler und Stickstoffüberleitung werden 448 g Polyesterpolyol PES5) und 57,3 g Trimellithsäureanhydrid eingewogen, auf 160°C aufgeheizt und gerührt bis keine Anhydridbande mehr durch Infrarot (IR)-Spektroskopie erkennbar ist. Dann wird auf 110°C abgekühlt und 24,5 g Solvesso^{®} 100 (Kohlenwasserstoffgemisch, Exxon Mobile, USA), 448 g des Polyesterpolyols PES5), 7,8 g Polyether LB 25 und 10 g Dimethylolpropionsäure eingewogen und homogenisiert. Dann werden 63,8 g Isophorondiisocyanat zugegeben und solange bei 135°C gerührt bis der NCO-Gehalt = 0% beträgt. Dann werden unter Rühren 96,4 g Butylglykol zugegeben, auf 80°C abgekühlt, mit 52 g Dimethylethanolamin neutralisiert und durch Zugabe von 1200 g destilliertem Wasser dispergiert.

Es wird die Dispersion 10) mit einem Festkörpergehalt von 42%, einem pH-Wert von 7,3 und einer mittleren Teilchengröße von 25 nm erhalten.

**Klarlack aus PES-PUR-Dispersion 9):** Bestandteile sind: 202 g PES-PUR-Dispersion 9), 15,5 g Maprenal^{®} MF 904; 1,7 g Additol^{®} XW 395, 1,7 g Surfynol^{®} 104E, 6,3 g einer 10%igen wässrigen Lösung von Dimethylethanolamin und 29 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat einen Feststoffgehalt von 39% und eine Auslaufzeit nach ISO 5 von 37 s. Nach dem Einbrennen erhält man einen Lackfilm mit sehr gutem Verlauf und Filmoptik, einer Pendelhärte von 132 s und einer Anlösbarkeit von 2244.

Ein Salzsprühtest für 144 Stunden führt zu einer Unterwanderung an einem Ritz in der Lackschicht von 12 mm. In Kombination mit einem blockierten Polyisocyanatvernetzer (Bayhydur^{®} BL 5140) erhält man ebenfalls bei 40°C Lagerung stabile Lacke und sehr gut verlaufende Filme mit sehr guter Filmoptik und einer Pendelhärte von 135 s und einer Erichsentiefung von >9 mm.

**Klarlack aus PES-PUR-Dispersion 10):** Bestandteile sind: 202 g PES-PUR-Dispersion 10), 15,5 g Maprenal^{®} MF 904; 1,7 g Additol^{®} XW 395, 1,7 g Surfynol^{®} 104E, 3,2 g einer 10%igen wässrigen Lösung von Dimethylethanolamin und 24 g destilliertes Wasser.

Die Bestandteile werden homogenisiert, ein Lackfilm aufgetragen und nach 10 Minuten Ablüften bei Raumtemperatur für 30 Minuten bei 140°C eingebrannt. Der Lack hat eine Feststoffgehalt von 40% und eine Auslaufzeit nach ISO 5 von 42 s. Nach dem Einbrennen erhält man einen Lackfilm mit sehr gutem Verlauf und Filmoptik, einer Pendelhärte von 173 s und einer Anlösbarkeit von 2244.

Ein Salzsprühtest für 144 Stunden führt zu einer Unterwanderung an einem Ritz in der Lackschicht von 17 mm. In Kombination mit einem blockierten Polyisocyanatvernetzer (Bayhydur® BL 5140) erhält man ebenfalls bei 40°C Lagerung stabile Lacke und sehr gut verlaufende Filme mit sehr guter Filmoptik und einer sehr hohen Pendelhärte von 195 s.

Insgesamt gesehen sind die erfindungsgemäßen PES-PUR-Dispersionen kostengünstige, einfach herstellbare Dispersionen, die in Kombination mit verschiedenen Vernetzerharzen auch bei 40°C Lagerung stabil sind und nach Applikation und Einbrennen zu Lacken und Beschichtungen mit sehr gutem Verlauf, sehr guter Filmoptik und variabel einstellbarem Härte-/Elastizitätsverhältnissen führen. Die Beständigkeitseigenschaften gegenüber Lösemitteln sind ebenfalls in weiten Bereichen variabel, die Dispersionen eigenen sich z.B. zur Herstellung von qualitativ hochwertigen Einbrennfüllern bzw. Steinschlagschutzbeschichtungen.

## Patentansprüche

1. Hydroxyfunktionelle Polyesterpolyurethan-Dispersionen enthaltend Umsetzungsprodukte aus
a) mindestens einem, mindestens difunktionellen Polyol,
b) mindestens einer (potentiell) ionischen Verbindung mit mindestens einer Säuregruppe und mindestens einer gegenüber Isocyanatgruppen reaktionsfähigen Gruppe ausgewählt aus der Gruppe der Di-, Tri- oder Monohydroxycarbonsäuren, Hydroxysulphonsäuren, Aminosulphonsäuren oder Aminocarbonsäuren,
c) mindestens einem Säureanhydrid und
d) mindestens einer, mindestens difunktionellen Polyisocyanatkomponente.

2. Hydroxyfunktionelle Polyesterpolyurethan-Dispersionen gemäß Anspruch 1, **dadurch gekennzeichnet, dass** diese zusätzlich
e) mindestens eine, mindestens monohydroxyfunktionelle Polyethylenoxidkomponente als Aufbaukomponente enthalten.

3. Hydroxyfunktionelle Polyesterpolyurethan-Dispersionen gemäß Anspruch 1, **dadurch gekennzeichnet, dass** Polyole a) zu mindestens 75 Gew.-% aus einem Polyesterpolyol und zu maximal 25 Gew.-% aus Polyetherpolyolen und/oder Polycarbonatpolyolen und/oder einem zweiten Polyesterpolyol, welches sich vom ersten Polyesterpolyol unterscheidet, bestehen.

4. Hydroxyfunktionelle Polyesterpolyurethan-Dispersionen gemäß Anspruch 1, **dadurch gekennzeichnet, dass** die Komponente b) Dimethylolpropionsäure und/oder Hydroxypivalinsäure ist.

5. Hydroxyfunktionelle Polyesterpolyurethan-Dispersionen gemäß Anspruch 1, **dadurch gekennzeichnet, dass** Komponente c) Trimelithsäureanhydrid ist.

6. Verfahren zur Herstellung der Polyesterpolyurethan-Dispersionen gemäß Anspruch 1, **dadurch gekennzeichnet, dass** in einem ersten Schritt die Polyolkomponente a), die Säurekomponente b) mit der Polyisocyanatkomponente d) bis zu einem NCO-Wert = 0 % umgesetzt werden, in einem zweiten Schritt das Reaktionsprodukt mit der Anhydridkomponente c) bei 80 bis 180°C solange umgesetzt wird, bis IR-spektroskopisch keine Anhydridbanden mehr nachweisbar sind, anschließend Neutralisationsmittel und gegebenenfalls organische Lösemittel und/oder Hilfsmittel zugesetzt werden und durch Zugabe von Wasser zum Polymer oder durch Zugabe des Polymers zu Wasser dispergiert wird.

7. Verfahren zur Herstellung der Polyesterpolyurethan-Dispersionen gemäß Anspruch 2, **dadurch gekennzeichnet, dass** in einem ersten Schritt die Polyolkomponente a), die Säurekomponente b) und die hydroxyfunktionelle Polyethylenoxidkomponente e) mit der Polyisocyanatkomponente d) bis zu einem NCO-Wert = 0 % umgesetzt werden, in einem zweiten Schritt das Reaktionsprodukt mit der Anhydridkomponente c) bei 80 bis 180°C solange umgesetzt wird, bis IR-spektroskopisch keine Anhydridbanden mehr nachweisbar sind, anschließend Neutralisationsmittel und gegebenenfalls organische Lösemittel und/oder Hilfsmittel zugesetzt werden und durch Zugabe von Wasser zum Polymer oder durch Zugabe des Polymers zu Wasser dispergiert wird.

8. Verfahren gemäß Anspruch 6 oder 7, **dadurch gekennzeichnet, dass** im ersten Schritt eine Teilmenge der Gesamtmenge an Polyolkomponente a) mit Säurekomponente b) mit Polyisocyanatkomponente d) umgesetzt und im zweiten Schritt die restliche Menge an Polyolkomponente a) zugegeben wird, wobei im ersten Reaktionsschritt 15 bis 75 Gew.-% der Gesamtmenge an Komponente a) eingesetzt wird.

9. Beschichtungsmittel, enthaltend die Polyesterpolyurethan-Dispersionen gemäß Anspruch 1.

10. Beschichtungsmittel, enthaltend
A) die erfindungsgemäßen hydroxyfunktionellen Polyesterpolyurethan-Dispersionen,
B) blockierte Polyisocyanate und/oder freie Isocyanatgruppen enthaltende Polyiosocyanate und/oder Aminovernetzerharz, wobei die Polyisocyanate gegebenenfalls hydrophil modifiziert sein können.

11. Wässrige, reaktive 2-Komponenten Beschichtungsmittel, enthaltend
A) 60 bis 98 Gew.-% der erfindungsgemäßen Polyesterpolyurethan-Dispersionen,
B) 2 bis 40 Gew.-% freie Isocyanatgruppen aufweisende Polyisocyanate, die gegebenenfalls hydrophil modifiziert sein können.

12. Verwendung der Polyesterpolyurethan-Dispersionen gemäß Anspruch 1 zur Herstellung von Lacken, Beschichtungen, Klebstoffen oder Dichtstoffen.

13. Verwendung der Polyesterpolyurethan-Dispersionen gemäß Anspruch 1 zur Herstellung von Einbrennfüllerlackierungen, Einschichtlacken, Steinschlagschutzgrundierungen und pigmentierten Decklacken.

## Claims

1. Hydroxy-functional polyesterpolyurethane dispersions comprising reaction products of
a) at least one at least difunctional polyol,
b) at least one (potentially) ionic compound having at least one acid group and at least one group that is reactive towards isocyanate groups and is selected from the group consisting of di-, tri- and monohydroxycarboxylic acids, hydroxysulphonic acids, aminosulphonic acids and aminocarboxylic acids,
c) at least one acid anhydride and
d) at least one at least difunctional polyisocyanate component.

2. Hydroxy-functional polyesterpolyurethane dispersions according to Claim 1, **characterized in that** they further comprise
e) at least one at least monohydroxy-functional polyethylene oxide component as structural component.

3. Hydroxy-functional polyesterpolyurethane dispersions according to Claim 1, **characterized in that** polyols a) are composed to an extent of at least 75% by weight of a polyester polyol and not more than 25% by weight of polyether polyols and/or polycarbonate polyols and/or a second polyester polyol which is different from the first polyester polyol.

4. Hydroxy-functional polyesterpolyurethane dispersions according to Claim 1, **characterized in that** component b) is dimethylolpropionic acid and/or hydroxypivalic acid.

5. Hydroxy-functional polyesterpolyurethane dispersions according to Claim 1, **characterized in that** component c) is trimellitic anhydride.

6. Process for preparing the polyesterpolyurethane dispersions according to Claim 1, **characterized in that**, in a first step, the polyol component a) and the acid component b) are reacted with the polyisocyanate component d) to an NCO value = 0%, in a second step the reaction product is reacted with the anhydride component c) at 80 to 180°C until anhydride bands are no longer detectable by IR spectroscopy, then neutralizing agents and optionally organic solvents and/or auxiliaries are added, and dispersion is carried out by adding water to the polymer or by adding the polymer to water.

7. Process for preparing the polyesterpolyurethane dispersions according to Claim 2, **characterized in that**, in a first step, the polyol component a), the acid component b) and the hydroxy-functional polyethylene oxide component e) are reacted with the polyisocyanate component d) to an NCO value = 0%, in a second step the reaction product is reacted with the anhydride component c) at 80 to 180°C until anhydride bands are no longer detectable by IR spectroscopy, then neutralizing agents and optionally organic solvents and/or auxiliaries are added, and dispersion is carried out by adding water to the polymer or by adding the polymer to water.

8. Process according to Claim 6 or 7, **characterized in that**, in the first step, a portion of the total amount of polyol component a) with acid component b) is reacted with polyisocyanate component d) and, in the second step, the remainder of polyol component a) is added, 15% to 75% by weight of the total amount of component a) being used in the first reaction step.

9. Coating compositions comprising the polyesterpolyurethane dispersions according to Claim 1.

10. Coating compositions comprising
A) the hydroxy-functional polyesterpolyurethane dispersions of the invention,
B) blocked polyisocyanates and/or polyisocyanates containing free isocyanate groups, and/or amino crosslinker resin, it being possible for the polyisocyanates optionally to have been hydrophilically modified.

11. Aqueous, reactive, 2-component coating compositions comprising
A) 60% to 98% by weight of the polyesterpolyurethane dispersions of the invention,
B) 2% to 40% by weight of polyisocyanates containing free isocyanate groups, which may optionally have been hydrophilically modified.

12. Use of the polyesterpolyurethane dispersions according to Claim 1 for producing paints, coatings, adhesives or sealants.

13. Use of the polyesterpolyurethane dispersions according to Claim 1 for producing baking primer-surfacer coatings, single-coat finishes, anti-stonechip primers and pigmented topcoats.

## Revendications

1. Dispersions de polyester-polyuréthane à fonctionnalité hydroxy contenant des produits de transformation constitués par
a) au moins un polyol, au moins difonctionnel,
b) au moins un composé (potentiellement) ionique présentant au moins un groupe acide et au moins un groupe réactif par rapport aux groupes isocyanate choisi dans le groupe des acides dihydroxycarboxyliques, trihydroxycarboxyliques ou monohydroxycarboxyliques, des acides hydroxysulfoniques, des acides aminosulfoniques ou des acides aminocarboxyliques,
c) au moins un anhydride d'acide et
d) au moins un composant polyisocyanate au moins difonctionnel.

2. Dispersions de polyester-polyuréthane à fonctionnalité hydroxy selon la revendication 1, **caractérisées en ce qu'**elles contiennent en outre e) au moins un composant poly(oxyde d'éthylène) au moins à fonctionnalité monohydroxy comme composant constitutif.

3. Dispersions de polyester-polyuréthane à fonctionnalité hydroxy selon la revendication 1, **caractérisées en ce que** les polyols a) sont constitués, à raison d'au moins 75% en poids, par un polyesterpolyol et à raison d'au maximum 25% en poids par des polyétherpolyols et/ou des polycarbonate-polyols et/ou un deuxième polyesterpolyol, qui se distingue du premier polyesterpolyol.

4. Dispersions de polyester-polyuréthane à fonctionnalité hydroxy selon la revendication 1, **caractérisées en ce que** le composant b) est l'acide diméthylolpropionique et/ou l'acide hydroxypivalique.

5. Dispersions de polyester-polyuréthane à fonctionnalité hydroxy selon la revendication 1, **caractérisées en ce que** le composant c) est l'anhydride de l'acide trimellitique.

6. Procédé pour la préparation des dispersions de polyester-polyuréthane selon la revendication 1, **caractérisé en ce que** dans une première étape, le composant polyol a), le composant acide b) sont transformés avec le composant polyisocyanate d) jusqu'à une valeur en NCO = 0%, dans une deuxième étape, le produit de réaction est transformé avec le composant anhydride c) à 80 jusqu'à 180°C jusqu'à ce qu'on ne détecte plus de bandes associées à l'anhydride par spectroscopie IR, puis on ajoute des agents de neutralisation et le cas échéant des solvants organiques et/ou des adjuvants et on disperse par addition d'eau dans le polymère ou par addition du polymère dans l'eau.

7. Procédé pour la préparation des dispersions de polyester-polyuréthane selon la revendication 2, **caractérisé en ce que** dans une première étape, le composant polyol a), le composant acide b) et le composant poly(oxyde d'éthylène) à fonctionnalité hydroxy e) sont transformés avec le composant polyisocyanate d) jusqu'à une valeur en NCO = 0%, dans une deuxième étape, le produit de réaction est transformé avec le composant anhydride c) à 80 jusqu'à 180°C jusqu'à ce qu'on ne détecte plus de bandes associées à l'anhydride par spectroscopie IR, puis on ajoute des agents de neutralisation et le cas échéant des solvants organiques et/ou des adjuvants et on disperse par addition d'eau dans le polymère ou par addition du polymère dans l'eau.

8. Procédé selon la revendication 6 ou 7, **caractérisé en ce qu'**on transforme dans la première étape une quantité partielle de la quantité totale de composant polyol a) avec le composant acide b) avec le composant polyisocyanate d) et dans la deuxième étape la quantité résiduelle de composant polyol a), où on utilise dans la première étape de réaction 15 à 75% en poids de la quantité totale de composant a).

9. Agent de revêtement, contenant les dispersions de polyester-polyuréthane selon la revendication 1.

10. Agent de revêtement, contenant
A) les dispersions de polyester-polyuréthane à fonctionnalité hydroxy selon l'invention,
B) des polyisocyanates bloqués et/ou des polyisocyanates contenant des groupes isocyanate libres et/ou une résine de réticulation à fonctionnalité amino, où les polyisocyanates peuvent le cas échéant être modifiés de manière hydrophile.

11. Agent de revêtement aqueux, réactif à 2 composants, contenant
A) 60 à 98% en poids des dispersions de polyester-polyuréthane selon l'invention,
B) 2 à 40% en poids de polyisocyanates présentant des groupes isocyanate libres, qui peuvent le cas échéant être modifiés de manière hydrophile.

12. Utilisation des dispersions de polyester-polyuréthane selon la revendication 1 pour la préparation de laques, revêtements, adhésifs ou substances d'étanchéité.

13. Utilisation des dispersions de polyester-polyuréthane selon la revendication 1 pour la préparation d'enduits thermodurcissables, de laques monocouches, d'apprêts résistant à l'impact par des gravillons et de laques de recouvrement pigmentées.
